# EUROPEAN PATENT APPLICATION

(11) **EP 4 822 395 A1**
(43) Date of publication of application: **14.10.2026**
(21) Application number: 24910991.9
(22) Date of filing: 20.12.2024
(51) Int. Cl.: G01S 17/34

(54) **DETECTION ASSEMBLY AND APPARATUS, AND TERMINAL DEVICE**

(30) Priority: 25.12.2023 CN 202311797183
(71) Applicant: Yinwang Intelligent Technologies Co., Ltd., Shenzhen, Guangdong 518110 (CN)
(72) Inventor: CHEN, Xin, Shenzhen, Guangdong 518129 (CN); YANG, Guangyao, Shenzhen, Guangdong 518129 (CN); SHI, Xianling, Shenzhen, Guangdong 518129 (CN)
(74) Representative: Henselmann, Alexander Gerhard
(86) International application number: PCT/CN2024/141200
(87) International publication number: WO 2025/140063

(57) **Abstract**

A detection component, a detection apparatus (1300), and a terminal device are provided, to improve detection accuracy of the detection apparatus. The detection component includes N in-phase/quadrature IQ detection channels and M first detection channels. The M first detection channels include a single-tube coherent detection channel and/or a balanced detection channel. The N IQ detection channels are respectively configured to mix N first echo signals with a local oscillator optical signal to form N first beat frequency signals and N second beat frequency signals, where the first beat frequency signals and the second beat frequency signals are orthogonal, and one of the N first echo signals corresponds to one of the N first beat frequency signals and one of the N second beat frequency signals. The M first detection channels are respectively configured to mix M second echo signals with the local oscillator optical signal to form M third beat frequency signals, where one of the M second echo signals corresponds to one third beat frequency signal in M first beat frequency signals.

## Description

### CROSS-REFERENCE TO RELATED APPLICATIONS

This application claims priority to Chinese Patent Application No. 202311797183.X, filed with the China National Intellectual Property Administration on December 25, 2023 and entitled "DETECTION COMPONENT AND APPARATUS, AND TERMINAL DEVICE", which is incorporated herein by reference in its entirety.

### TECHNICAL FIELD

This application relates to the field of detection technologies, and in particular, to a detection component and apparatus, and a terminal device.

### BACKGROUND

With development and progress of sensor technologies, intelligent detection sensors of vehicles have become a research hotspot in the field of vehicle-assisted driving. An intelligent vehicle (intelligent vehicle for short) can provide more convenient and safer driving experience. For example, a radar sensor may be mounted on an intelligent vehicle to obtain ambient environment information of the vehicle day and night, especially long-range environment information, to implement assisted driving or even advanced autonomous driving.

Among a plurality of radar sensors, a frequency modulated continuous wave (frequency modulated continuous wave, FMCW) light detection and ranging (light detection and ranging, LiDAR) performs detection based on a principle of continuous wave coherent detection. The FMCW LiDAR transmits frequency modulated laser light. After the frequency modulated laser light illuminates a target, an echo signal is generated. After the FMCW LiDAR receives the echo optical signal, the echo optical signal and a local oscillator optical signal are mixed to form a beat frequency signal. The beat frequency signal includes delay information of the target, and a distance to the target can be inverted based on the delay information of the target. In addition, if the target has a velocity (namely, a radial velocity) in a laser direction, the beat frequency signal further includes Doppler frequency information. However, frequencies introduced by the distance and the velocity of the target are superimposed and reflected in a spectrum of the beat frequency signal. As a result, positive and negative frequencies of the beat frequency signal cannot be discriminated, and the FMCW LiDAR may incorrectly calculate the distance and the velocity of the target. Consequently, detection accuracy of the FMCW LiDAR is reduced.

Therefore, how to improve detection accuracy of a detection apparatus is an urgent technical problem to be resolved.

### SUMMARY

This application provides a detection component and apparatus, and a terminal device, to improve detection accuracy of the detection apparatus.

According to a first aspect, this application provides a detection component. The detection component includes N in-phase/quadrature IQ detection channels and M first detection channels, the M first detection channels include a single-tube coherent detection channel and/or a balanced detection channel, and N and M are positive integers. The N IQ detection channels are respectively configured to mix N first echo signals with a local oscillator optical signal to form N first beat frequency signals and N second beat frequency signals, where the first beat frequency signals and the second beat frequency signals are orthogonal, one of the N first echo signals corresponds to one of the N first beat frequency signals, and one of the N first echo signals corresponds to one of the N second beat frequency signals. The M first detection channels are respectively configured to mix M second echo signals with the local oscillator optical signal to form M third beat frequency signals, where one of the M second echo signals corresponds to one third beat frequency signal in M first beat frequency signals.

In the foregoing solution, the IQ detection channel and the first detection channel (for example, the single-tube coherent detection channel and/or the balanced detection channel) are disposed in the detection component, so that a detection apparatus can correct detection data of the coherent detection channel and/or the balanced detection channel based on detection data of the IQ detection channel, to effectively eliminate a detection error caused by a failure to discriminate positive and negative frequencies of an intermediate frequency signal of an echo signal obtained by the coherent detection channel and/or the balanced detection channel, and effectively improve accuracy of the detection apparatus.

In a possible design, N is equal to M, and the N IQ detection channels and the M first detection channels are alternately disposed. In this design, the IQ detection channels and the first detection channels are alternately disposed, so that each first detection channel can correct its own detection data based on detection data of an IQ detection channel adjacent to the first detection channel, thereby improving detection accuracy of the first detection channel.

In a possible design, N is greater than M, and a neighboring detection channel of each of the M first detection channels is an IQ detection channel. In this design, the adjacent detection channel of the first detection channel is set to the IQ detection channel, so that the first detection channel can correct its own detection data based on detection data of the IQ detection channel adjacent to the first detection channel, thereby improving detection accuracy of the first detection channel.

In a possible design, the N IQ detection channels include a first IQ detection channel, a second IQ detection channel, and a third IQ detection channel; G first detection channels in the M first detection channels are disposed between the first IQ detection channel and the second IQ detection channel; and (M-G) first detection channels in the M first detection channels are disposed between the second IQ detection channel and the third IQ detection channel, where G is a positive integer. In this design, the first detection channel is disposed between the IQ detection channels, so that the first detection channel can correct its data based on detection data of the IQ detection channels on two sides of the first detection channel, thereby improving detection accuracy of the first detection channel.

In a possible design, the IQ detection channel includes a coupler, a phase shifter, and/or a photoelectric detector.

In a possible design, the first detection channel includes a photoelectric detector.

According to a second aspect, an embodiment of this application provides a detection apparatus. The detection apparatus includes a control module and N+M receive ports, where the N+M receive ports correspond to N IQ detection channels and M first detection channels, the M first detection channels include a single-tube coherent detection channel and/or a balanced detection channel, and N and M are positive integers. The N IQ detection channels are respectively configured to mix N first echo signals with a local oscillator optical signal to form N first beat frequency signals and N second beat frequency signals, where the first beat frequency signals and the second beat frequency signals are orthogonal, one of the N first echo signals corresponds to one of the N first beat frequency signals, and one of the N first echo signals corresponds to one of the N second beat frequency signals. The M first detection channels are respectively configured to mix M second echo signals with the local oscillator optical signal to form M third beat frequency signals, where one of the M second echo signals corresponds to one third beat frequency signal in M first beat frequency signals. The control module is configured to determine point cloud information based on the N first beat frequency signals, the N second beat frequency signals, and the M third beat frequency signals. The point cloud information includes distance information and/or velocity information of a target.

In this embodiment of this application, the IQ detection channel and the first detection channel are disposed in the detection apparatus, so that the control module in the detection apparatus can determine the point cloud information of the target based on beat frequency signals corresponding to the IQ detection channel and the first detection channel. In this way, a detection error of the single-tube coherent detection channel and/or a detection error of the balanced detection channel can be eliminated, thereby improving detection accuracy of the detection apparatus.

In a possible design, that the control module determines the point cloud information based on the N first beat frequency signals, the N second beat frequency signals, and the M third beat frequency signals includes: correcting, based on the N first beat frequency signals and the N second beat frequency signals, frequency data corresponding to the M third beat frequency signals, to obtain M fourth beat frequency signals; and determining the point cloud information based on the N first beat frequency signals, the N second beat frequency signals, and the M fourth beat frequency signals. In this design, frequency data corresponding to a beat frequency signal of the single-tube coherent detection channel and/or a beat frequency signal of the balanced detection channel is corrected by using a beat frequency signal of the IQ detection channel, so that a calculation error caused by a failure to distinguish between positive and negative frequency signals in the beat frequency signal of the single-tube coherent detection channel and/or the beat frequency signal of the balanced detection channel can be effectively eliminated.

In a possible design, that the control module determines the point cloud information based on the first beat frequency signals and the second beat frequency signals includes: determining a first point cloud based on the N first beat frequency signals and the N second beat frequency signals; determining a second point cloud based on the M third beat frequency signals; correcting the second point cloud based on the first point cloud, to obtain a third point cloud; and determining the point cloud information based on the first point cloud and the third point cloud. In this design, a point cloud of the single-tube coherent detection channel and/or a point cloud of the balanced detection channel are/is corrected by using a point cloud corresponding to the IQ detection channel, so that a calculation error caused by a failure to distinguish between positive and negative frequency signals in the beat frequency signal of the single-tube coherent detection channel and/or the beat frequency signal of the balanced detection channel can be effectively eliminated, and finally obtained point cloud data is more accurate.

In a possible design, the N IQ detection channels are further configured to detect a target whose distance to the detection apparatus is less than or equal to a first distance threshold. The "target whose distance to the detection apparatus is less than or equal to the first distance threshold" may be understood as a short-distance target. In this design, the detection apparatus may detect the short-distance target through the IQ detection channel, to effectively improve detection accuracy of the detection apparatus for the short-distance target.

In a possible design, the N IQ detection channels and the M first detection channels are further configured to detect a target whose distance to the detection apparatus is greater than a first distance threshold. The "target whose distance to the detection apparatus is greater than the first distance threshold" may be understood as a long-distance target. In this design, the detection apparatus may detect the long-distance target through the IQ detection channel and the first detection channel, to effectively improve detection angle resolution of the detection apparatus for the long-distance target.

In a possible design, the N IQ detection channels are further configured to detect a distance between the target and the detection apparatus. In this design, the IQ detection channel may further detect the distance between the target and the detection apparatus, so that the detection apparatus uses a detection solution adapted to the distance for the target.

In a possible design, a quantity of quantization bits of an analog-to-digital converter ADC of the IQ detection channel is greater than a quantity of quantization bits of an ADC of the first detection channel. In this design, the ADC with a larger quantity of quantization bits is used to perform analog-to-digital conversion on the IQ detection channel, so that accuracy of detection data of the IQ detection channel can be effectively improved. The ADC with a smaller quantity of quantization bits is used to perform analog-to-digital conversion on the first detection channel, so that power consumption of the detection apparatus can be reduced. Therefore, when the IQ detection channel and the first detection channel are used to detect the target, detection accuracy of the detection apparatus can be improved, and power consumption and costs of the detection apparatus can be reduced.

According to a third aspect, an embodiment of this application provides a detection method. The method may be applied to the detection apparatus in the second aspect. The detection apparatus includes a control module and N+M receive ports, the N+M receive ports correspond to N in-phase/quadrature IQ detection channels and M first detection channels, the M first detection channels include a single-tube coherent detection channel and/or a balanced detection channel, and N and M are positive integers. The method includes: The N IQ detection channels respectively mix N first echo signals with a local oscillator optical signal to form N first beat frequency signals and N second beat frequency signals, where the first beat frequency signals and the second beat frequency signals are orthogonal, one of the N first echo signals corresponds to one of the N first beat frequency signals, and one of the N first echo signals corresponds to one of the N second beat frequency signals; the M first detection channels respectively mix M second echo signals with the local oscillator optical signal to form M third beat frequency signals, where one of the M second echo signals corresponds to one third beat frequency signal in M first beat frequency signals; and the control module may determine point cloud information based on the N first beat frequency signals, the N second beat frequency signals, and the M third beat frequency signals.

In this embodiment of this application, the IQ detection channel and the first detection channel are disposed in the detection apparatus, and the control module in the detection apparatus can determine point cloud information of a target based on beat frequency signals obtained through the IQ detection channel and the first detection channel. In this way, a detection error of the single-tube coherent detection channel and/or a detection error of the balanced detection channel can be eliminated, thereby improving detection accuracy of the detection apparatus.

In a possible design, that the control module determines the point cloud information based on the N first beat frequency signals, the N second beat frequency signals, and the M third beat frequency signals includes: correcting, based on the N first beat frequency signals and the N second beat frequency signals, frequency data corresponding to the M third beat frequency signals, to obtain M fourth beat frequency signals; and determining the point cloud information based on the N first beat frequency signals, the N second beat frequency signals, and the M fourth beat frequency signals.

In a possible design, that the control module determines the point cloud information based on the first beat frequency signals and the second beat frequency signals includes: determining a first point cloud based on the N first beat frequency signals and the N second beat frequency signals; determining a second point cloud based on the M third beat frequency signals; correcting the second point cloud based on the first point cloud, to obtain a third point cloud; and determining the point cloud information based on the first point cloud and the third point cloud.

In a possible design, the N IQ detection channels are further configured to detect a target whose distance to the detection apparatus is less than or equal to a first distance threshold. The "target whose distance to the detection apparatus is less than or equal to the first distance threshold" may be understood as a short-distance target.

In a possible design, the N IQ detection channels and the M first detection channels are further configured to detect a target whose distance to the detection apparatus is greater than a first distance threshold. The "target whose distance to the detection apparatus is greater than the first distance threshold" may be understood as a long-distance target.

In a possible design, the N IQ detection channels are further configured to detect a distance between the target and the detection apparatus.

In a possible design, a quantity of quantization bits of an analog-to-digital converter (analog-to-digital converter, ADC) of the IQ detection channel is greater than a quantity of quantization bits of an ADC of the first detection channel.

According to a fourth aspect, an embodiment of this application provides a terminal device. The terminal device includes the sounding apparatus according to any one of the second aspect or the implementations of the second aspect. The terminal device may be, for example, a smartphone, a smart home device, a smart manufacturing device, a robot, an uncrewed aerial vehicle, or an intelligent transport device (for example, an automated guided vehicle (automated guided vehicle, AGV) or an uncrewed transport vehicle).

According to a fifth aspect, this application provides a chip. The chip includes at least one processor and an interface circuit. Further, optionally, the chip may further include a memory. The processor is configured to execute a computer program or instructions stored in the memory, so that the chip performs the method according to any one of the third aspect or the possible implementations of the third aspect.

According to a sixth aspect, this application provides a computer-readable storage medium. The computer-readable storage medium stores a computer program or instructions. When the computer program or the instructions are executed by a detection apparatus, the detection apparatus is enabled to perform the method according to any one of the third aspect or the possible implementations of the third aspect.

According to a seventh aspect, this application provides a computer program product. The computer program product includes a computer program or instructions. When the computer program or the instructions are executed by a detection apparatus, the detection apparatus is enabled to perform the method according to any one of the third aspect or the possible implementations of the third aspect.

For beneficial effect of any design in the third aspect to the seventh aspect, refer to the beneficial effect that can be achieved in the corresponding design of the second aspect. Details are not described again in this application.

### BRIEF DESCRIPTION OF DRAWINGS

FIG. 1 is an example diagram of a chirp signal;
FIG. 2 is an example diagram of curves showing time-varying changes of frequencies of a laser signal and an echo optical signal;
FIG. 3 is an example diagram of aliasing of positive and negative frequencies in a beat frequency signal of positive and negative chirps;
FIG. 4 is an example diagram of spectra corresponding to positive and negative frequencies in a beat frequency signal of positive and negative chirps;
FIG. 5 is an example diagram of a structure of a conventional single-tube coherent detection channel;
FIG. 6 is an example diagram of a structure of a conventional balanced detection channel;
FIG. 7 is an example diagram of a Fourier transform spectrum;
FIG. 8 is an example diagram of a structure of an IQ detection channel;
FIG. 9 is an example diagram of a structure of a detection apparatus according to this application;
FIG. 10 is an example diagram of a structure of a control module according to this application;
FIG. 11A is an example diagram 1 of a structure of a detection component according to this application;
FIG. 11B is an example diagram 2 of a structure of a detection component according to this application;
FIG. 11C is an example diagram 3 of a structure of a detection component according to this application;
FIG. 11D is an example diagram 4 of a structure of a detection component according to this application;
FIG. 12 is an example of a schematic flowchart of a detection method according to this application; and
FIG. 13 is an example diagram of a possible structure of a detection apparatus according to this application.

### DESCRIPTION OF EMBODIMENTS

The following describes in detail embodiments of this application with reference to accompanying drawings.

Some terms in this application are described below. It should be noted that these explanations are for ease of understanding by a person skilled in the art, and are not intended to limit the protection scope claimed by this application.

### 1. Chirp (Chirp) signal

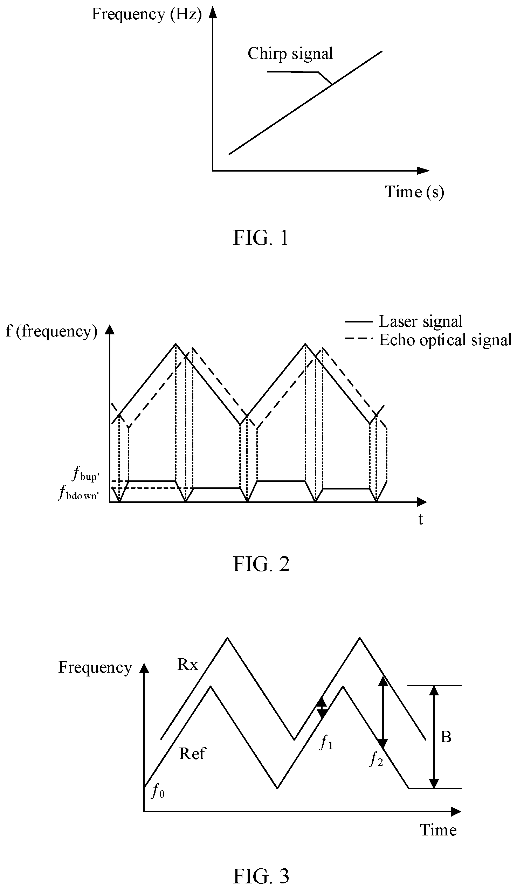

A chirp signal is a signal in which a carrier frequency linearly increases within pulse duration, and is also referred to as a linear frequency modulation signal. A frequency of the chirp signal may increase from low to high (up-chirp) or decrease from high to low (down-chirp). FIG. 1 is a diagram of the chirp signal. The chirp signal is encountered in many applications, including radar, sonar, spread spectrum, optical communication, image processing, Doppler effect, a pendulum motion, a gravitational wave, and the like.

A main reason for generation of the chirp signal is that a refractive index of a medium dynamically changes due to impact of dynamic electrical signal modulation, and therefore a phase of an optical signal propagated in the medium changes. This phase change is directly reflected as a dynamic change in a frequency of an output optical signal. The frequency of the chirp signal exhibits a time-varying change, and this can be classified into a positive chirp and a negative chirp. The positive chirp indicates that the frequency increases with time, that is, a laser output is first at a low frequency and then at a high frequency. For example, a rising front edge of a pulse is a low frequency, and a falling back edge is a high frequency. Conversely, the negative chirp indicates that the frequency decreases with time. For example, in normal dispersion, a high-frequency wave has a large refractive index and a low propagation velocity, and a low-frequency wave has a high propagation velocity. In this case, the positive chirp is formed.

### 2. Doppler shift

The Doppler shift (Doppler shift) is a phase and frequency change caused by a propagation path difference when a target has a radial displacement relative to a detector in detection time.

### 3. Beat frequency signal

A local oscillator optical signal in a detection apparatus is mixed with a received echo optical signal to form a beat frequency signal. In some technical solutions, the following distance-velocity inversion equation set may be constructed by using triangular wave frequency modulation as an emitted laser signal and by using a pair of positive and negative chirps: $R ∝ \left({f}_{bup}+{f}_{bdown}\right) ;$ and $v ∝ \left({f}_{bup}-{f}_{bdown}\right)$

Herein, *R* is a distance of a target, *v* is a velocity of the target, *f_{bup}* is a positive-chirp beat frequency, and *f_{bdown}* is a negative-chirp beat frequency. Distance information and velocity information of the target may be calculated according to the foregoing equation set.

As shown in FIG. 2, a triangular wave frequency modulation signal is used as an emitted laser signal. A solid line is a curve showing a time-varying change of a frequency of the emitted laser signal, and a dashed line is a curve showing a time-varying change of a frequency of the echo optical signal. A beat frequency signal is formed by mixing the echo optical signal with the laser signal. A translation of the echo optical signal relative to the emitted laser signal on a time axis may represent the distance information of the target. A Doppler frequency introduced by the velocity of the target causes the echo optical signal to be translated up and down on a frequency axis relative to the emitted laser signal, and a translation direction is determined by a direction of the velocity of the target. However, in some specific cases, distance and velocity calculation errors may occur. For example, when a Doppler shift is greater than a frequency shift introduced by a velocity delay, a "negative frequency" may occur in the beat frequency signal of the echo optical signal. As shown in FIG. 3, *f*₁ and *f*₂ respectively represent a positive frequency and a negative frequency that are identified from a beat frequency signal of positive and negative chirps. When the Doppler shift *f_{d}* > 0, and |*f_{d}*| > |*f_{R}*|, f_{R} represents a frequency introduced by a target delay, and *f*₁ and *f*₂ satisfy the following formulas: ${f}_{1} = {f}_{R} - {f}_{d} < 0 ;$ and ${f}_{2} = {f}_{R} + {f}_{d} > 0$

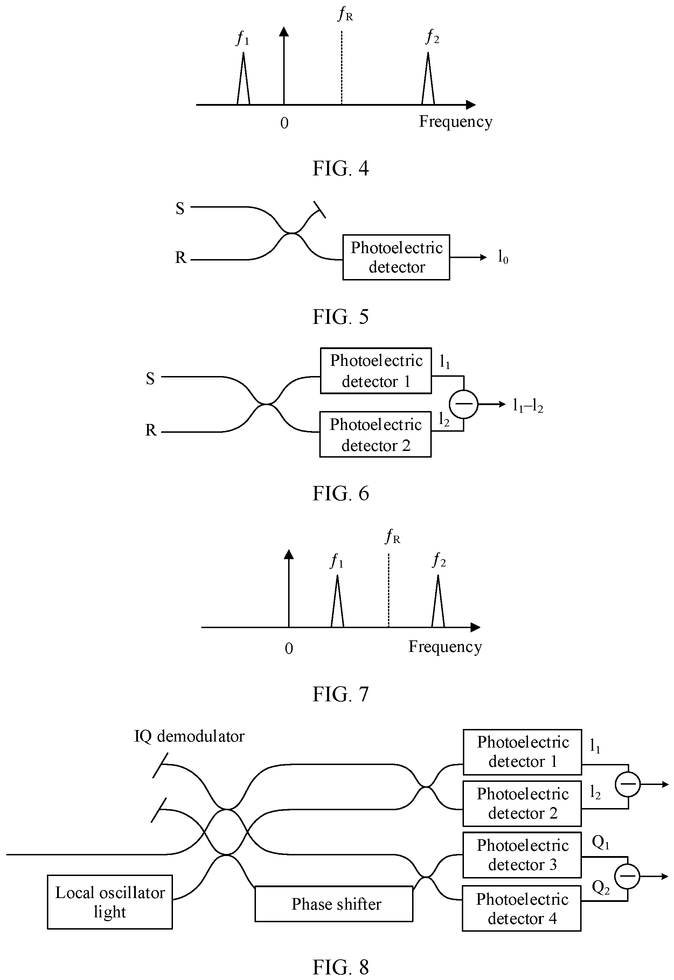

FIG. 3 is a diagram of aliasing of positive and negative frequencies in a beat frequency signal of positive and negative chirps, and FIG. 4 is a diagram of spectra corresponding to the positive and negative frequencies in the beat frequency signal of the positive and negative chirps.

FIG. 5 is a diagram of a structure of a conventional single-tube coherent detection channel. The single-tube coherent detection channel includes one photoelectric detector. After an echo optical signal S and a local oscillator optical signal R are received by the photoelectric detector, the echo optical signal S is mixed with the local oscillator optical signal R to form a beat frequency signal I₀. FIG. 6 is a diagram of a structure of a balanced coherent detection channel. The balanced coherent detection channel includes a photoelectric detector 1 and a photoelectric detector 2. After the echo optical signal S and the local oscillator optical signal R are received by the photoelectric detector 1, the echo optical signal S is mixed with the local oscillator optical signal R to form a beat frequency signal I₁. After the echo optical signal S and the local oscillator optical signal R are received by the photoelectric detector 2, the echo optical signal S is mixed with the local oscillator optical signal R to form a beat frequency signal I₂. The beat frequency signal I₁ minus the beat frequency signal I₂ can eliminate common-mode noise and improve a signal-to-noise ratio of detection. After normalized processing is performed on the beat frequency signal I₀, the beat frequency signal I₁, and the beat frequency signal I₂, the following formula is met: $I \left(t\right) = cos \left(2{πf}_{beat}t+{ξ}_{0}\right)$

Herein, f_{beat} is a frequency of the beat frequency signal, and ξ₀ is an initial phase.

A Fourier transform spectrum corresponding to *I(t)* is: $FT \left(I\left(t\right)\right) = π \left[δ\left(f+{f}_{beat}\right)+δ\left(f-{f}_{beat}\right)\right]$

It can be learned from the foregoing formula that the spectrum is a symmetric double-sideband spectrum. The double-sideband spectrum is shown in FIG. 7, and whether f_{beat} is positive or negative cannot be distinguished. In this case, a positive/negative frequency discrimination error occurs, which results in incorrect calculation of the distance and the velocity of the target if the foregoing equation set is still used.

In-phase/Quadrature (In-phase/Quadrature, IQ) detection, also referred to as phase diversity coherent detection (phase diversity coherent detection), is a method that can distinguish between positive and negative frequencies. FIG. 8 is a diagram of a structure of an IQ detection channel. The IQ detection channel includes a coupler, a phase shifter, a photoelectric detector 1, a photoelectric detector 2, a photoelectric detector 3, and a photoelectric detector 4. Any one of the photoelectric detectors 1 to 4 may be, for example, a photodiode, and the phase shifter may be, for example, a 90° optical mixer. After the echo optical signal S and the local oscillator signal R are received by the photoelectric detector 1, the echo optical signal S is mixed with the local oscillator signal R to form a beat frequency signal I₁. After the echo optical signal S and the local oscillator signal R are received by the photoelectric detector 2, the echo optical signal S is mixed with the local oscillator signal R to form a beat frequency signal I₂. After the echo optical signal S and the local oscillator signal R are received by the photoelectric detector 3, the echo optical signal S is mixed with the local oscillator signal R that passes through the phase shifter to form a beat frequency signal Q₁. After the echo optical signal S and the local oscillator signal R that passes through the phase shifter are received by the photoelectric detector 4, the echo optical signal S is mixed with the local oscillator signal R to form a beat frequency signal Q₂. An in-phase signal *I_{I}* is formed by the beat frequency signal I₁ minus the beat frequency signal I₂, and a quadrature signal *I_{Q}* is formed by the beat frequency signal Q₁ minus the beat frequency signal Q₂, where *I_{I}* and *I_{Q}* satisfy the following formulas: ${I}_{I} = cos \left(2{πf}_{beat}t+{ξ}_{0}\right) ;$ and ${I}_{Q} = sin \left(2{πf}_{beat}t+{ξ}_{0}\right)$

In addition, the in-phase signal *I_{I}* and the quadrature signal *I_{Q}* may constitute the following complex signal: ${I}_{complex} \left(t\right) = cos \left(2{πf}_{beat}t+{ξ}_{0}\right) + isin \left(2{πf}_{beat}t+{ξ}_{0}\right)$

A Fourier transform spectrum of the complex signal is: $FT \left({I}_{complex}\left(t\right)\right) = π \left[δ\left(f-{f}_{beat}\right)\right]$

The Fourier transform spectrum is a single-sideband spectrum, and therefore positive and negative frequencies can be directly distinguished. Therefore, the beat frequency signal in the IQ detection channel does not have the problem that positive and negative frequencies cannot be discriminated, and therefore detection accuracy of the IQ detection channel is high.

In some technical solutions, to avoid an accuracy error caused by a failure to discriminate positive and negative frequencies of a beat frequency signal in detection of a single-tube coherent detection channel and/or a balanced detection channel, all detection channels in the detection apparatus are set to IQ detection channels. However, the IQ detection channel includes a large quantity of components (for example, couplers and photoelectric detectors), resulting in excessively high hardware costs of the detection apparatus. In addition, when all channels are IQ detection channels, the detection apparatus has additional requirements (for example, computational power requirements) in terms of data collection and storage and digital signal processing.

In view of this, this application provides a detection component, to improve detection accuracy of the detection apparatus and reduce costs of the detection apparatus. In embodiments of this application, an IQ detection channel and a first detection channel (for example, a single-tube coherent detection channel and/or a balanced detection channel) are disposed in the detection component, so that detection data of the coherent detection channel and/or the balanced detection channel can be corrected based on detection data of the IQ detection channel, to effectively eliminate a detection error caused by a failure to discriminate positive and negative frequencies of an intermediate frequency signal of an echo signal obtained by the coherent detection channel and/or the balanced detection channel, and effectively improve accuracy of the detection apparatus. In addition, in comparison with the solution in which all detection channels in the detection component are set to IQ detection channels, costs of the detection apparatus can be reduced.

The detection component provided in embodiments of this application may be disposed in the detection apparatus, and the detection apparatus may be disposed in any terminal device that needs to detect a target. The terminal device may be, for example, a smartphone, a smart home device, a smart manufacturing device, a robot, an uncrewed aerial vehicle, or an intelligent transport device (for example, an automated guided vehicle (automated guided vehicle, AGV) or an uncrewed transport vehicle). In a possible implementation, for example, the terminal device is a vehicle, and the detection apparatus is a lidar, and may be mounted in any one or more of six directions: front, rear, left, right, upper, and lower of the vehicle, for example, around a vehicle lamp, around a rearview mirror, near a vehicle door, at a rear bumper of the vehicle, behind a windshield, or on a vehicle roof, to capture information about an ambient environment of the vehicle.

It should be noted that application scenarios described in this application may be applied to fields such as unmanned driving, self-driving, assisted driving, intelligent driving, connected vehicles, security surveillance, biomedicine, or surveying and mapping (for example, three-dimensional drawing).

The following describes the detection apparatus provided in this application with reference to specific accompanying drawings.

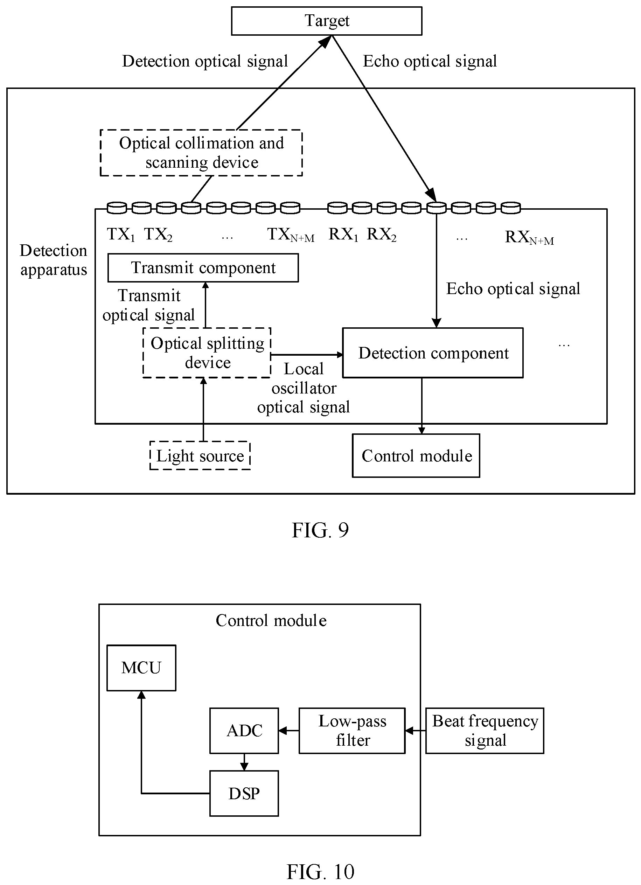

FIG. 9 is a diagram of a possible architecture of a detection apparatus according to this application. The detection apparatus may include a control module, a transmitting component, and a detection component, and include N+M transmit ports TX₁ to TX_{N+M} and N+M receive ports RX₁ to RX_{N+M}. The transmitting component may transmit an optical signal to a target through the transmit ports TX₁ to TX_{N+M}, and the detection component may receive, through the receive ports RX₁ to RX_{N+M}, an echo optical signal reflected by the target. The echo optical signal is mixed with a local oscillator optical signal in the detection component to form a beat frequency signal. The control module may determine a point cloud based on the beat frequency signal.

Optionally, as shown in FIG. 9, the detection apparatus may further include a light source, an optical splitting device, and an optical collimation and scanning device. The light source may generate a laser signal, and the optical splitting device may split the laser signal to form the transmit optical signal and the local oscillator optical signal. The transmit optical signal is input to the transmitting component, and the local oscillator optical signal is input to the detection component. The transmit optical signal may be transmitted to free space through the optical collimation and scanning device, for target detection. The light source may be, for example, any one of a single-wavelength triangular wave frequency modulation light source, a dual-light-source triangular wave frequency modulation light source, a single-frequency laser light source, or a dual-wavelength laser light source. This is not specifically limited in embodiments of this application.

Optionally, the detection apparatus may further include an optical power amplification component. The optical power amplification component is disposed (not shown in the figure) between the light source and the optical splitting device. The optical power amplification component may amplify power of the laser signal generated by the light source to obtain an amplified laser signal. The optical splitting device performs optical splitting processing on the amplified laser signal to obtain the local oscillator optical signal and N detection signals.

The following describes some components in the detection apparatus.

### (1) Control module

As shown in FIG. 10, in a possible implementation, the control module may include a low-pass filter, an analog-to-digital converter (analog-to-digital converter, ADC), and a digital signal processor (digital signal processor, DSP). The beat frequency signal formed in the detection component may be input into the low-pass filter. After performing filtering processing on the beat frequency signal, the low-pass filter obtains a filtered beat frequency signal, and inputs the beat frequency signal into the ADC. The ADC converts the beat frequency signal into a digital signal, and inputs the digital signal into the DSP. The DSP processes the digital signal to obtain point cloud information. A quantity of ADCs is related to types and a quantity of detection channels in the detection apparatus. One IQ detection channel in the detection apparatus corresponds to two ADCs, and one single-tube coherent detection channel or balanced detection channel in the detection apparatus corresponds to one ADC.

It should be noted herein that various components included in the control module are merely examples for description. The control module may include more or fewer components than those shown in the figure. The components shown or not shown may be combined or divided in any manner, and any component may be replaced with another component having an equivalent function. In an example, the control module may further include one or more of a microcontroller unit (microcontroller unit, MCU), a low noise amplifier (low noise amplifier, LNA), a power amplifier (power amplifier, PA), an up-converter, a detector, a voltage-controlled oscillator, and the like. In another example, the DSP may alternatively be replaced with another component having a signal processing capability, and the like. This is not specifically limited in this application.

### (2) Transmitting component

The transmitting component may include a plurality of transmit antennas or transmitters. The transmitting component may include N+M transmit channels, and the N+M transmit channels are in a one-to-one correspondence with the N+M transmit ports TX₁ to TX_{N+M} in the detection apparatus. The transmitting component is configured to transmit a detection signal to the target, so that the target generates an echo optical signal.

### (3) Detection component

The detection component may include N IQ detection channels and M first detection channels, and the M first detection channels may include a single-tube coherent detection channel and/or a balanced detection channel. The N IQ detection channels are in a one-to-one correspondence with N receive ports RX₁ to RX_{N} in the detection apparatus, and the M first detection channels are in a one-to-one correspondence with N receive ports RX_{N} to RX_{N+M} in the detection apparatus.

In this embodiment of this application, the IQ detection channel may include a coupler, a phase shifter, and/or a photoelectric detector, and the first detection channel includes a photoelectric detector.

Both N and M are positive integers. N may be greater than M, or N may be less than M, or N may be equal to M. This is not specifically limited in embodiments of this application.

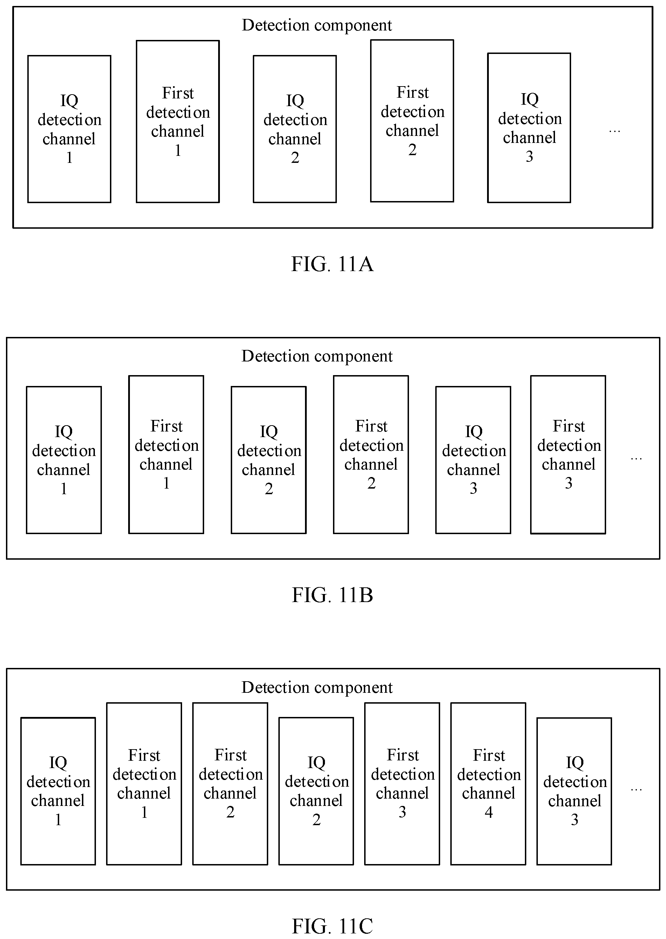

Example 1: As shown in FIG. 11A, N is greater than M, N=3, and M=2. To be specific, the detection component in the detection apparatus includes three IQ detection channels and two first detection channels, and the detection component includes an IQ detection channel 1, an IQ detection channel 2, an IQ detection channel 3, a first detection channel 1, and a first detection channel 2. The first detection channel 1 is disposed between the IQ detection channel 1 and the IQ detection channel 2, and the first detection channel 2 is disposed between the IQ detection channel 2 and the IQ detection channel 3. In this way, an adjacent detection channel of the first detection channel is set to the IQ detection channel, so that the first detection channel can correct its own detection data based on detection data of the IQ detection channel adjacent to the first detection channel, thereby improving detection accuracy of the first detection channel.

Example 2: As shown in FIG. 11B, N=M, N=3, and M=3. The detection component includes an IQ detection channel 1, an IQ detection channel 2, an IQ detection channel 3, a first detection channel 1, a first detection channel 2, and a first detection channel 3. The first detection channel 1 is disposed between the IQ detection channel 1 and the IQ detection channel 2, the first detection channel 2 is disposed between the IQ detection channel 2 and the IQ detection channel 3, and the first detection channel 3 is disposed adjacent to the IQ detection channel 3. In this way, the IQ detection channels and the first detection channels are alternately disposed, so that each first detection channel can correct its own detection data based on detection data of an IQ detection channel adjacent to the first detection channel, thereby improving detection accuracy of the first detection channel.

Example 3: As shown in FIG. 11C, N<M, N=3, and M=4. To be specific, the detection component includes an IQ detection channel 1, an IQ detection channel 2, an IQ detection channel 3, a first detection channel 1, a first detection channel 2, a first detection channel 3, and a first detection channel 4. The first detection channel 1 and the first detection channel 2 are disposed between the IQ detection channel 1 and the IQ detection channel 2, and the first detection channel 3 and the first detection channel 4 are disposed between the IQ detection channel 2 and the IQ detection channel 3.

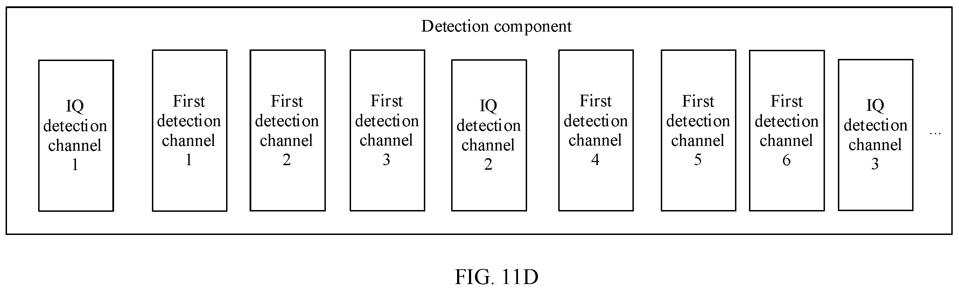

Example 4: As shown in FIG. 11D, N<M, N=3, and M=6. To be specific, the detection component includes an IQ detection channel 1, an IQ detection channel 2, an IQ detection channel 3, a first detection channel 1, a first detection channel 2, a first detection channel 3, a first detection channel 4, a first detection channel 5, and a first detection channel 6. The first detection channel 1, the first detection channel 2, and the first detection channel 3 are disposed between the IQ detection channel 1 and the IQ detection channel 2, and the first detection channel 4, the first detection channel 5, and the first detection channel 6 are disposed between the IQ detection channel 2 and the IQ detection channel 3.

In Example 3 and Example 4, the first detection channel is disposed between the IQ detection channels, so that the first detection channel can correct its data based on detection data of the IQ detection channels on two sides of the first detection channel.

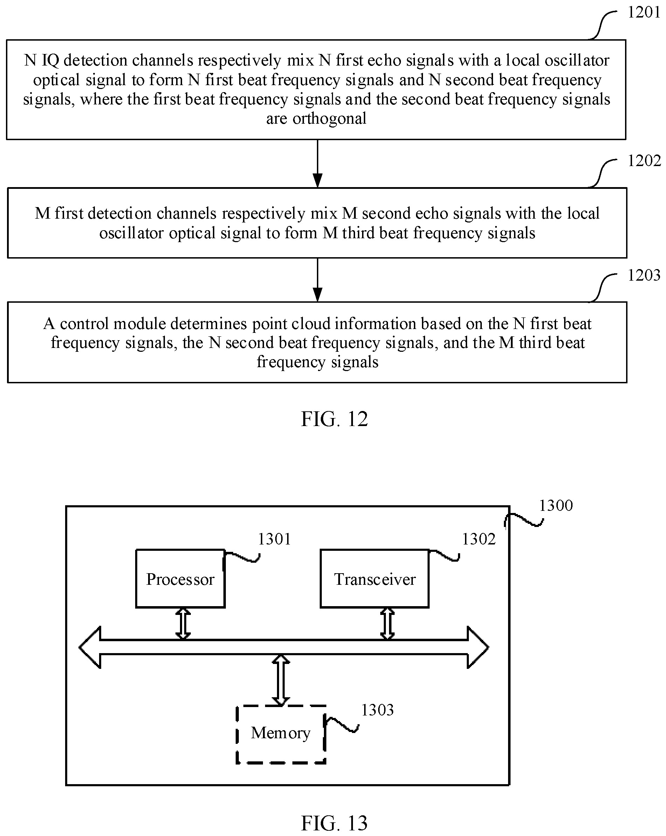

Based on the foregoing detection apparatus, an embodiment of this application provides a detection method. The detection method is applied to the detection apparatus. As shown in FIG. 12, the method includes the following steps.

Step 1201: N IQ detection channels respectively mix N first echo signals with a local oscillator optical signal, to form N first beat frequency signals and N second beat frequency signals, where one first beat frequency signal is orthogonal to one second beat frequency signal, one of the N first echo signals corresponds to one of the N first beat frequency signals, and one of the N first echo signals corresponds to one of the N second beat frequency signals.

In this embodiment of this application, the N first echo signals may be echo optical signals formed by transmitting an optical signal to a target through transmit ports TX₁ to TX_{N} by the transmitting component in the detection apparatus, and the N IQ detection channels may receive the N first echo signals. In addition, the local oscillator optical signal obtained by performing, by the optical splitting device in the detection apparatus, optical splitting processing on the optical signal generated by the light source may be input into each IQ detection channel.

Step 1202: M first detection channels respectively mix M second echo signals with the local oscillator optical signal to form M third beat frequency signals, where one of the M second echo signals corresponds to one third beat frequency signal in M first beat frequency signals.

In this embodiment of this application, the M second echo signals may be echo optical signals formed by transmitting the optical signal to the target through transmit ports TX_{N+1} to TX_{M} by the transmitting component in the detection apparatus, and the M first detection channels may receive the M second echo signals. In addition, the local oscillator optical signal obtained by performing, by the optical splitting device in the detection apparatus, optical splitting processing on the optical signal generated by the light source may be input into each first detection channel.

Step 1203: The control module determines point cloud information based on the N first beat frequency signals, the N second beat frequency signals, and the M third beat frequency signals.

When step 1203 is specifically implemented, that the control module determines the point cloud information based on the N first beat frequency signals, the N second beat frequency signals, and the M third beat frequency signals includes but is not limited to the following cases.

Case 1: The control module corrects, based on the N first beat frequency signals and the N second beat frequency signals, frequency data corresponding to the M third beat frequency signals, to obtain M fourth beat frequency signals; and determines the point cloud information based on the N first beat frequency signals, the N second beat frequency signals, and the M fourth beat frequency signals. In this way, frequency data corresponding to a beat frequency signal of the single-tube coherent detection channel and/or a beat frequency signal of the balanced detection channel is corrected by using a beat frequency signal of the IQ detection channel, so that a calculation error caused by a failure to distinguish between positive and negative frequency signals in the beat frequency signal of the single-tube coherent detection channel and/or the beat frequency signal of the balanced detection channel can be effectively eliminated.

One of the N first beat frequency signals corresponds to one of the N second beat frequency signals. In other words, one first beat frequency signal and one second beat frequency signal obtained by one IQ detection channel are orthogonal. Therefore, the control module may obtain frequency data (for example, first Fourier transform spectra) of the first beat frequency signal and the second beat frequency signal based on the first beat frequency signal and the second beat frequency signal of the IQ detection channel. The control module may obtain frequency data (for example, a second Fourier transform spectrum) of the third beat frequency signal based on a third beat frequency signal of a first detection channel adjacent to the IQ detection channel. Positive and negative frequencies in the frequency data of the first beat frequency signal and the second beat frequency signal can be distinguished, and positive and negative frequencies in the frequency data of the third beat frequency signal cannot be distinguished. The control module may correct the frequency data of the third beat frequency signal based on the frequency data of the first beat frequency signal and the second beat frequency signal.

For example, still refer to FIG. 11A, where N=3, and M=2. To be specific, the detection component in the detection apparatus includes three IQ detection channels and two first detection channels. The detection component includes an IQ detection channel 1, an IQ detection channel 2, an IQ detection channel 3, a first detection channel 1, and a first detection channel 2. The IQ detection channel 1 may receive an echo optical signal 1, and the echo optical signal 1 is mixed with a local oscillator optical signal in the IQ detection channel 1 to form a first beat frequency signal A1 and a second beat frequency signal B1. The first beat frequency signal A1 and the second beat frequency signal B1 are orthogonal, and the control module determines, based on the first beat frequency signal A1 and the second beat frequency signal B1, frequency data 1 corresponding to the IQ detection channel 1. The IQ detection channel 2 may receive an echo optical signal 2, and the echo optical signal 2 is mixed with a local oscillator optical signal in the IQ detection channel 2 to form a first beat frequency signal A2 and a second beat frequency signal B2. The first beat frequency signal A2 and the second beat frequency signal B2 are orthogonal to each other, and the control module determines, based on the first beat frequency signal A2 and the second beat frequency signal B2, frequency data 2 corresponding to the IQ detection channel 2. The IQ detection channel 3 may receive an echo optical signal 3, and the echo optical signal 3 is mixed with a local oscillator optical signal in the IQ detection channel 3 to form a first beat frequency signal A3 and a second beat frequency signal B3. The first beat frequency signal A3 and the second beat frequency signal B3 are orthogonal to each other, and the control module determines, based on the first beat frequency signal A3 and the second beat frequency signal B3, frequency data 3 corresponding to the IQ detection channel 3. The first detection channel 1 may receive an echo optical signal 4, and the echo optical signal 4 is mixed with the local oscillator optical signal in the first detection channel 1 to form a third beat frequency signal C1. The control module determines frequency data 4 based on the third beat frequency signal C1. The first detection channel 2 may receive an echo optical signal 5, and the echo optical signal 5 is mixed with the local oscillator optical signal in the first detection channel 2 to form a third beat frequency signal C2. The control module determines frequency data 5 based on the third beat frequency signal C2. Positive and negative frequencies in the frequency data 1 to the frequency data 3 can be distinguished, and positive and negative frequencies in the frequency data 4 and the frequency data 5 cannot be distinguished.

Because the IQ detection channel 1 and the IQ detection channel 2 are adjacent channels of the first detection channel 1, the control module may correct the frequency data 4 of the first detection channel 1 based on the frequency data 1 and/or the frequency data 2, to form a fourth beat frequency signal D1. Then, the control module may determine point cloud information of the first detection channel 1 based on the fourth beat frequency signal D1. For example, positive and negative frequencies in the frequency data 1 are used as positive and negative frequencies of the frequency data 4. For another example, positive and negative frequencies in the frequency data 2 are used as positive and negative frequencies of the frequency data 4. For another example, an average value of a positive frequency in the frequency data 1 and a positive frequency in the frequency data 2 is used as a positive frequency in the frequency data 4, and an average value of a negative frequency in the frequency data 1 and a negative frequency in the frequency data 2 is used as a negative frequency in the frequency data 4.

Similarly, because the IQ detection channel 2 and the IQ detection channel 3 are adjacent channels of the first detection channel 2, the control module may correct the frequency data 5 of the first detection channel 2 based on the frequency data 2 and/or the frequency data 3, to form a fourth beat frequency signal D2. Then, the control module may determine point cloud information of the first detection channel 2 based on the fourth beat frequency signal D2. For example, positive and negative frequencies in the frequency data 2 are used as positive and negative frequencies of the frequency data 5. For another example, positive and negative frequencies in the frequency data 3 are used as positive and negative frequencies of the frequency data 5. For another example, an average value of a positive frequency in the frequency data 2 and a positive frequency in the frequency data 3 is used as a positive frequency in the frequency data 5, and an average value of a negative frequency in the frequency data 2 and a negative frequency in the frequency data 3 is used as a negative frequency in the frequency data 5.

Case 2: The control module determines a first point cloud based on the N first beat frequency signals and the N second beat frequency signals; determines a second point cloud based on the M third beat frequency signals; corrects the second point cloud based on the first point cloud, to obtain a third point cloud; and determines the point cloud information based on the first point cloud and the third point cloud. The first point cloud is a point cloud obtained by the IQ detection channel, and resolution of the first point cloud is low. The third point cloud is a point cloud obtained by correcting the first detection channel, and resolution of the third point cloud is high. The first point cloud and the third point cloud are point clouds of a same scenario obtained at a same moment. In this way, a point cloud of the single-tube coherent detection channel and/or a point cloud of the balanced detection channel are/is corrected by using a point cloud corresponding to the IQ detection channel, so that a calculation error caused by a failure to distinguish between positive and negative frequency signals in the beat frequency signal of the single-tube coherent detection channel and/or the beat frequency signal of the balanced detection channel can be effectively eliminated, and accuracy of a corrected point cloud (namely, the third point cloud) is high. In addition, the control module determines the final point cloud information based on the first point cloud and the third point cloud, so that both resolution and accuracy of the final point cloud information are high.

The point cloud includes velocity information and/or distance information of the target. Therefore, that the control module corrects the second point cloud based on the first point cloud means that the control module may correct velocity information and/or distance information of the target that are/is detected by the first detection channel based on velocity information and/or distance information of the target that are/is detected by the IQ detection channel.

For example, still refer to FIG. 11A, where N=3, and M=2. To be specific, the detection component in the detection apparatus includes three IQ detection channels and two first detection channels. The detection component includes an IQ detection channel 1, an IQ detection channel 2, an IQ detection channel 3, a first detection channel 1, and a first detection channel 2. The IQ detection channel 1 may receive an echo optical signal 1, and the echo optical signal 1 is mixed with a local oscillator optical signal in the IQ detection channel 1 to form a first beat frequency signal A1 and a second beat frequency signal B1. The first beat frequency signal A1 and the second beat frequency signal B1 are orthogonal to each other, and the control module determines, based on the first beat frequency signal A1 and the second beat frequency signal B1, a velocity 1 and a distance 1 of the target detected by the IQ detection channel 1. The IQ detection channel 2 may receive an echo optical signal 2, and the echo optical signal 2 is mixed with a local oscillator optical signal in the IQ detection channel 2 to form a first beat frequency signal A2 and a second beat frequency signal B2. The first beat frequency signal A2 and the second beat frequency signal B2 are orthogonal to each other, and the control module determines, based on the first beat frequency signal A2 and the second beat frequency signal B2, a velocity 2 and a distance 2 of the target detected by the IQ detection channel 2. The IQ detection channel 3 may receive an echo optical signal 3, and the echo optical signal 3 is mixed with a local oscillator optical signal in the IQ detection channel 3 to form a first beat frequency signal A3 and a second beat frequency signal B3. The first beat frequency signal A3 and the second beat frequency signal B3 are orthogonal to each other, and the control module determines, based on the first beat frequency signal A3 and the second beat frequency signal B3, a velocity 3 and a distance 3 of the target detected by the IQ detection channel 3. The first detection channel 1 may receive an echo optical signal 4, and the echo optical signal 4 is mixed with the local oscillator optical signal in the first detection channel 1 to form a third beat frequency signal C1. The control module determines, based on the third beat frequency signal C1, a velocity 4 and a distance 4 of the target detected by the first detection channel 1. The first detection channel 2 may receive an echo optical signal 5, and the echo optical signal 5 is mixed with the local oscillator optical signal in the first detection channel 2 to form a third beat frequency signal C2. The control module determines, based on the third beat frequency signal C2, a velocity 5 and a distance 5 of the target detected by the second detection channel 2.

Because the IQ detection channel 1 and the IQ detection channel 2 are adjacent channels of the first detection channel 1, the control module may correct, based on the velocity 1 of the target detected by the IQ detection channel 1 and/or the velocity 2 of the target detected by the IQ detection channel 2, the velocity 4 of the target detected by the first detection channel 1, and/or the control module may correct, based on the distance 1 of the target detected by the IQ detection channel 1 and/or the distance 2 of the target detected by the IQ detection channel 2, the distance 4 of the target detected by the first detection channel 1. For example, the control module may compare the velocity 4 of the target detected by the first detection channel 1 with the velocity 1 of the target detected by the IQ detection channel 1. If a difference between the velocity 4 and the velocity 1 is less than a first threshold, the velocity 4 of the target detected by the first detection channel 1 is corrected to the velocity 1. For another example, the control module may compare the velocity 4 of the target detected by the first detection channel 1 with the velocity 2 of the target detected by the IQ detection channel 2. If a difference between the velocity 4 and the velocity 2 is less than a first threshold, the velocity 4 of the target detected by the first detection channel 1 is corrected to the velocity 2. For another example, the control module may separately compare the velocity 4 of the target detected by the first detection channel 1 with the velocity 1 of the target detected by the IQ detection channel 1 and the velocity 2 of the target detected by the first detection channel 2. If both a difference between the velocity 4 and the velocity 1 and a difference between the velocity 2 and the velocity 1 are less than a first threshold, the velocity 4 of the target detected by the first detection channel 1 is corrected to an average value of the velocity 1 and the velocity 2. For example, the control module may compare the distance 4 of the target detected by the first detection channel 1 with the distance 1 of the target detected by the IQ detection channel 1. If a difference between the distance 4 and the distance 1 is less than the first threshold, the distance 4 of the target detected by the first detection channel 1 is corrected to the distance 1. For another example, the control module may compare the distance 4 of the target detected by the first detection channel 1 with the distance 2 of the target detected by the IQ detection channel 2. If a difference between the distance 4 and the distance 2 is less than the first threshold, the distance 4 of the target detected by the first detection channel 1 is corrected to the distance 2. For another example, the control module may separately compare the distance 4 of the target detected by the first detection channel 1 with the distance 1 of the target detected by the IQ detection channel 1 and the distance 2 of the target detected by the first detection channel 2. If both a difference between the distance 4 and the distance 1 and a difference between the distance 2 and the distance 1 are less than the first threshold, the distance 4 of the target detected by the first detection channel 1 is corrected to an average value of the distance 1 and the distance 2.

Similarly, because the IQ detection channel 2 and the IQ detection channel 3 are adjacent channels of the first detection channel 2, the control module may correct, based on the velocity 2 of the target detected by the IQ detection channel 2 and/or the velocity 3 of the target detected by the IQ detection channel 3, the velocity 5 of the target detected by the first detection channel 2, and/or the control module may correct, based on the distance 2 of the target detected by the IQ detection channel 2 and/or the distance 3 of the target detected by the IQ detection channel 3, the distance 5 of the target detected by the first detection channel 2. For example, the control module may compare the velocity 5 of the target detected by the first detection channel 2 with the velocity 2 of the target detected by the IQ detection channel 2. If a difference between the velocity 5 and the velocity 2 is less than a first threshold, the velocity 5 of the target detected by the first detection channel 2 is corrected to the velocity 2. For another example, the control module may compare the velocity 5 of the target detected by the first detection channel 2 with the velocity 3 of the target detected by the IQ detection channel 3. If a difference between the velocity 5 and the velocity 3 is less than a first threshold, the velocity 5 of the target detected by the first detection channel 2 is corrected to the velocity 3. For another example, the control module may separately compare the velocity 5 of the target detected by the first detection channel 2 with the velocity 2 of the target detected by the IQ detection channel 2 and the velocity 3 of the target detected by the first detection channel 3. If both a difference between the velocity 5 and the velocity 2 and a difference between the velocity 3 and the velocity 2 are less than a first threshold, the velocity 5 of the target detected by the first detection channel 2 is corrected to an average value of the velocity 2 and the velocity 3. For example, the control module may compare the distance 5 of the target detected by the first detection channel 2 with the distance 2 of the target detected by the IQ detection channel 2. If a difference between the distance 5 and the distance 2 is less than the first threshold, the distance 5 of the target detected by the first detection channel 2 is corrected to the distance 2. For another example, the control module may compare the distance 5 of the target detected by the first detection channel 2 with the distance 3 of the target detected by the IQ detection channel 3. If a difference between the distance 5 and the distance 3 is less than the first threshold, the distance 5 of the target detected by the first detection channel 2 is corrected to the distance 3. For another example, the control module may separately compare the distance 5 of the target detected by the first detection channel 2 with the distance 2 of the target detected by the IQ detection channel 2 and the distance 3 of the target detected by the first detection channel 3. If both a difference between the distance 5 and the distance 2 and a difference between the distance 3 and the distance 2 are less than the first threshold, the distance 5 of the target detected by the first detection channel 2 is corrected to an average value of the distance 2 and the distance 3.

In this embodiment of this application, different detection solutions may be used for a long-distance target and a short-distance target. The short-distance target is a target whose distance to the detection apparatus is less than or equal to a first distance threshold, and the long-distance target is a target whose distance to the detection apparatus is greater than the first distance threshold. The first distance threshold may be, for example, 5 m or 10 m. This is not limited in embodiments of this application. The detection apparatus may roughly estimate a distance between the target and the detection apparatus through the IQ detection channel, so that the detection apparatus uses a detection solution adapted to the distance for the target.

In a possible implementation, the detection apparatus detects the short-distance target only through the N IQ detection channels. In this way, detection accuracy of the detection apparatus on the short-distance target is effectively improved.

In another possible implementation, the detection apparatus detects the long-distance target through the N IQ detection channels and the M first detection channels. In this way, the detection apparatus may detect the long-distance target through the IQ detection channel and the first detection channel, to effectively improve angular resolution of the long-distance target.

In this embodiment of this application, different quantities of quantization bits may be used for different types of detection channels of the detection apparatus. The quantity of quantization bits may represent quantization precision used during analog-to-digital conversion of the detection channel. In a possible implementation, a quantity of quantization bits of an analog-to-digital converter ADC of the IQ detection channel is greater than a quantity of quantization bits of an ADC of the first detection channel. For example, an ADC in the control module performs, by using 9 bits or 10 bits, analog-to-digital conversion on the echo signal detected by the IQ detection channel, and the ADC in the control module performs, by using 8 bits, analog-to-digital conversion on the echo signal detected by the first detection channel. In this way, the ADC with a larger quantity of quantization bits is used to perform analog-to-digital conversion on the IQ detection channel, so that accuracy of detection data of the IQ detection channel can be effectively improved. The ADC with a smaller quantity of quantization bits is used to perform analog-to-digital conversion on the first detection channel, so that power consumption of the detection apparatus can be reduced. Therefore, when the IQ detection channel and the first detection channel are used to detect the target, detection accuracy of the detection apparatus can be improved, and power consumption and costs of the detection apparatus can be reduced.

Based on the foregoing detection method, this application further provides a detection apparatus. FIG. 13 is a diagram of a possible structure of a detection apparatus according to this application. The detection apparatus 1300 may be configured to implement functions of the detection apparatus in the foregoing method embodiments, and therefore can also implement beneficial effect of the foregoing method embodiments. As shown in FIG. 13, the detection apparatus 1300 includes a processor 1301 and a transceiver 1302. The detection apparatus 1300 is configured to implement functions of the detection apparatus in the method embodiment shown in FIG. 12. Optionally, the detection apparatus 1300 may further include a memory 1303. The memory 1303 may be coupled to the processor 1301, and store program instructions and data that are necessary for the detection apparatus 1300. The transceiver 1302 includes the N IQ detection channels and the M first detection channels.

When the detection apparatus 1300 is configured to implement the functions of the detection apparatus in the method embodiment shown in FIG. 12, the transceiver 1302 sends N+M detection signals; receives N first echo signals and M second echo signals; mixes the N first echo signals with a local oscillator optical signal respectively through the N IQ detection channels to form N first beat frequency signals and N second beat frequency signals, where one first beat frequency signal is orthogonal to one second beat frequency signal, one of the N first echo signals corresponds to one of the N first beat frequency signals, and one of the N first echo signals corresponds to one of the N second beat frequency signals; and mixes the M second echo signals with the local oscillator optical signal respectively through the M first detection channels to form M third beat frequency signals, where one of the M second echo signals corresponds to one third beat frequency signal in M first beat frequency signals. The processor 1301 determines point cloud information based on the N first beat frequency signals, the N second beat frequency signals, and the M third beat frequency signals.

For more detailed descriptions of the processor 1301 and the transceiver 1302, refer to the related descriptions in the method embodiment shown in FIG. 12, and details are not described herein again.

It should be understood that the processor 1301 in this embodiment of this application may be implemented by a processor or a processor-related circuit module, and the transceiver 1302 may be implemented by an interface circuit or an interface circuit-related circuit module.

Based on the foregoing detection apparatus, this application further provides a terminal device. The terminal device may include any detection apparatus in the foregoing content, for example, the detection apparatus 1300. Further, optionally, the terminal device may further include a memory, and the memory is configured to store a program or instructions. Certainly, the terminal device may further include another device, for example, a wireless control apparatus.

For example, the terminal device may be a vehicle (for example, an uncrewed vehicle, a smart vehicle, an electric vehicle, or a digital vehicle), a robot, a mapping device, an uncrewed aerial vehicle, a smart home device (for example, a television, a robotic vacuum cleaner, a smart desk lamp, an acoustic system, a smart lighting system, an electrical control system, home background music, a home theater system, an intercom system, or a video surveillance device), a smart production device (for example, an industrial device), a smart transportation device (for example, an AGV, an uncrewed transport vehicle, or a truck), or a smart terminal (for example, a mobile phone, a computer, a tablet computer, a palmtop computer, a desktop computer, a headset, a stereo, a wearable device, a vehicle-mounted device, a virtual reality device, or an augmented reality device).

An embodiment of this application provides a chip system. The chip system includes a processor and an interface circuit. The processor is configured to invoke instructions from the interface circuit and run the instructions. When the processor executes the instructions, the detection method according to any one of the foregoing implementations is implemented.

An embodiment of this application provides a computer-readable storage medium. The computer-readable storage medium is configured to store a computer program or instructions. When the computer program or the instructions are run, the resource adjustment method according to any one of the foregoing implementations is implemented. The computer-readable storage medium may be any usable medium that can be stored by a compute device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid state disk), or the like.

An embodiment of this application provides a computer program product including instructions. When the computer program product runs on a computer, the detection method according to any one of the foregoing implementations is implemented. The computer program product may be software or a program product that includes the instructions and that can run on a compute device or can be stored in any usable medium.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used for implementation, all or some of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions of different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A detection component, wherein the detection component comprises N in-phase/quadrature IQ detection channels and M first detection channels, the M first detection channels comprise a single-tube coherent detection channel and/or a balanced detection channel, and N and M are positive integers;
the N IQ detection channels are respectively configured to mix N first echo signals with a local oscillator optical signal to form N first beat frequency signals and N second beat frequency signals, wherein the first beat frequency signals and the second beat frequency signals are orthogonal, one of the N first echo signals corresponds to one of the N first beat frequency signals, and one of the N first echo signals corresponds to one of the N second beat frequency signals; and
the M first detection channels are respectively configured to mix M second echo signals with the local oscillator optical signal to form M third beat frequency signals, wherein one of the M second echo signals corresponds to one third beat frequency signal in M first beat frequency signals.

2. The detection component according to claim 1, wherein N is equal to M, and the N IQ detection channels and the M first detection channels are alternately disposed.

3. The detection component according to claim 1, wherein N is greater than M, and an adjacent detection channel of each of the M first detection channels is an IQ detection channel.

4. The detection component according to claim 1, wherein the N IQ detection channels comprise a first IQ detection channel, a second IQ detection channel, and a third IQ detection channel; G first detection channels in the M first detection channels are disposed between the first IQ detection channel and the second IQ detection channel; and (M-G) first detection channels in the M first detection channels are disposed between the second IQ detection channel and the third IQ detection channel, wherein G is a positive integer.

5. The detection component according to any one of claims 1 to 4, wherein the IQ detection channel comprises a coupler, a phase shifter, and/or a photoelectric detector.

6. The detection component according to any one of claims 1 to 4, wherein the first detection channel comprises a photoelectric detector.

7. A detection apparatus, comprising a control module and N+M receive ports, wherein the N+M receive ports correspond to N in-phase/quadrature IQ detection channels and M first detection channels, the M first detection channels comprise a single-tube coherent detection channel and/or a balanced detection channel, and N and M are positive integers;
the N IQ detection channels are respectively configured to mix N first echo signals with a local oscillator optical signal to form N first beat frequency signals and N second beat frequency signals, wherein the first beat frequency signals and the second beat frequency signals are orthogonal, one of the N first echo signals corresponds to one of the N first beat frequency signals, and one of the N first echo signals corresponds to one of the N second beat frequency signals;
the M first detection channels are respectively configured to mix M second echo signals with the local oscillator optical signal to form M third beat frequency signals, wherein one of the M second echo signals corresponds to one third beat frequency signal in M first beat frequency signals; and
the control module is configured to determine point cloud information based on the N first beat frequency signals, the N second beat frequency signals, and the M third beat frequency signals.

8. The apparatus according to claim 7, wherein that the control module determines the point cloud information based on the N first beat frequency signals, the N second beat frequency signals, and the M third beat frequency signals comprises:
correcting, based on the N first beat frequency signals and the N second beat frequency signals, frequency data corresponding to the M third beat frequency signals, to obtain M fourth beat frequency signals; and
determining the point cloud information based on the N first beat frequency signals, the N second beat frequency signals, and the M fourth beat frequency signals.

9. The apparatus according to claim 7, wherein that the control module determines the point cloud information based on the first beat frequency signals and the second beat frequency signals comprises:
determining a first point cloud based on the N first beat frequency signals and the N second beat frequency signals;
determining a second point cloud based on the M third beat frequency signals;
correcting the second point cloud based on the first point cloud to obtain a third point cloud; and
determining the point cloud information based on the first point cloud and the third point cloud.

10. The apparatus according to any one of claims 7 to 9, wherein
the N IQ detection channels are further configured to detect a target whose distance to the detection apparatus is less than or equal to a first distance threshold.

11. The apparatus according to any one of claims 7 to 9, wherein
the N IQ detection channels and the M first detection channels are further configured to detect a target whose distance to the detection apparatus is greater than a first distance threshold.

12. The apparatus according to claim 10 or 11, wherein the N IQ detection channels are further configured to:
detect the distance between the target and the detection apparatus.

13. The apparatus according to any one of claims 7 to 12, wherein a quantity of quantization bits of an analog-to-digital converter ADC of the IQ detection channel is greater than a quantity of quantization bits of an ADC of the first detection channel.

14. A terminal device, comprising the detection apparatus according to any one of claims 7 to 13.
